# EUROPEAN PATENT APPLICATION

(11) **EP 4 528 125 A1**
(43) Date of publication of application: **26.03.2025**
(21) Application number: 24201219.3
(22) Date of filing: 18.09.2024
(51) Int. Cl.: F16D 65/02

(54) **WHEEL END ASSEMBLY HAVING A PARKING BRAKE**

(30) Priority: 21.09.2023 US 202318471448
(71) Applicant: ArvinMeritor Technology, LLC, Troy, MI 48084 (US)
(72) Inventor: Sivadoss, Karthikraj, Troy, 48084 (US); Raya, Dhanapal, Troy, 48084 (US); Mirji, Pradeep, Troy, 48084 (US)
(74) Representative: Whitfield, Jack Stephen

(57) **Abstract**

A wheel end assembly that comprises a spindle, a brake rotor, and a parking brake. The brake rotor is rotatable about an axis with respect to the spindle. The parking brake is radially disposed between the spindle and the brake rotor. The parking brake is operable to apply a brake torque to inhibit rotation of the brake rotor.

## Description

### TECHNICAL FIELD

This relates to a wheel end assembly that comprises a parking brake.

### BACKGROUND

An axle assembly that has a differential brake is disclosed in U.S. patent application no. 17/713,317.

### SUMMARY

A wheel end assembly is provided. The wheel end assembly includes a spindle, a brake rotor, and a parking brake. The brake rotor is rotatable about an axis with respect to the spindle. The parking brake is radially disposed between the spindle and the brake rotor. The parking brake is operable to apply a brake torque to inhibit rotation of the brake rotor about the axis.

The parking brake may encircle the spindle. The brake rotor may encircle the parking brake.

The brake rotor may further comprise a friction surface. The friction surface may face toward the axis. The parking brake may further comprise a friction member. The friction member may be engageable with the friction surface to provide the brake torque. The friction surface may encircle the friction member. The friction surface may be disposed at an oblique angle with respect to the axis.

The parking brake may further comprise a parking brake body. The friction member may be fixedly disposed on the parking brake body.

The parking brake body may be moveable along the axis. The parking brake body may be moveable between a first position and a second position. The friction member may engage the friction surface of the brake rotor when in the first position. The friction member may not engage the friction surface of the brake rotor when in the second position.

The parking brake body and the spindle may have mating splines. The mating splines may permit the parking brake body to move axially with respect to the spindle.

The parking brake may further comprise a biasing member. The biasing member may urge the parking brake body to move along the axis. The biasing member may urge the parking brake body to move along the axis toward the brake rotor. The biasing member may be radially disposed between the parking brake body and the spindle. The parking brake body may encircle the biasing member. The biasing member may encircle the spindle.

The parking brake may further comprise a retainer. The retainer may be fixedly positioned with respect to the spindle. The biasing member may extend between the retainer and the parking brake body.

The spindle may further comprise a spline. The retainer may further comprise a retainer spline. The retainer spline may mate with the spline. The retainer spline may mate with the spline to inhibit movement of the retainer with respect to the spindle.

The parking brake may further comprise an actuator. The actuator may urge the parking brake body to move along the axis. The actuator may urge the parking brake body to move along the axis away from the brake rotor. The actuator may be inflatable with a fluid. The parking brake body may move away from the brake rotor when the actuator is inflated.

The parking brake body may further comprise a fluid passage. The fluid passage may extend through the parking brake body. The fluid passage may be fluidly connected to the actuator.

The actuator may engage the parking brake body. The actuator may encircle the spindle.

The parking brake may further comprise a fastener. The fastener may be fixedly disposed on the spindle. The actuator may extend between the fastener and the parking brake body. The actuator may be radially disposed between the spindle and the parking brake body.

### BRIEF DESCRIPTION OF THE DRAWINGS

Figure 1 is a perspective view of an example of an axle assembly and an example of a wheel end assembly.
Figure 2 is a section view of a portion of the wheel end assembly along section line 2-2.
Figure 3 is a magnified view of a portion of Figure 2 showing an example of a parking brake of the wheel end assembly in a first position.
Figure 4 is a magnified view showing the parking brake in a second position.
Figure 5 is a partially exploded view of a portion of the wheel end assembly.
Figures 6 and 7 are exploded views of the parking brake.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It will also be understood that, although the terms first, second, etc. are, in some instances, used herein to describe various elements, these elements should not be limited by these terms. These terms are only used to distinguish one element from another. For example, a first element could be termed a second element, and similarly a second element could be termed a first element without departing from the scope of the various described embodiments. The first element and the second element are both elements, but they are not the same element.

The terminology used in the description of the various described embodiments is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

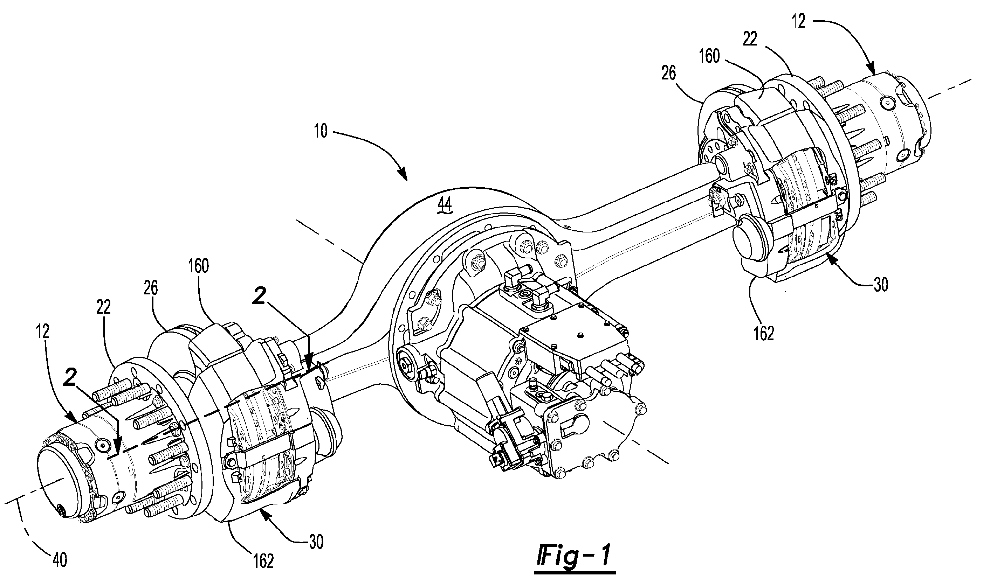

Referring to Figure 1, an example of an axle assembly 10 and a wheel end assembly 12 is shown. The axle assembly 10 may be provided with a land vehicle like a car, truck, bus, farm equipment, mining equipment, military transport or weaponry vehicle, or cargo loading equipment for land, air, or marine vessels. The vehicle may include a trailer for transporting cargo in one or more embodiments.

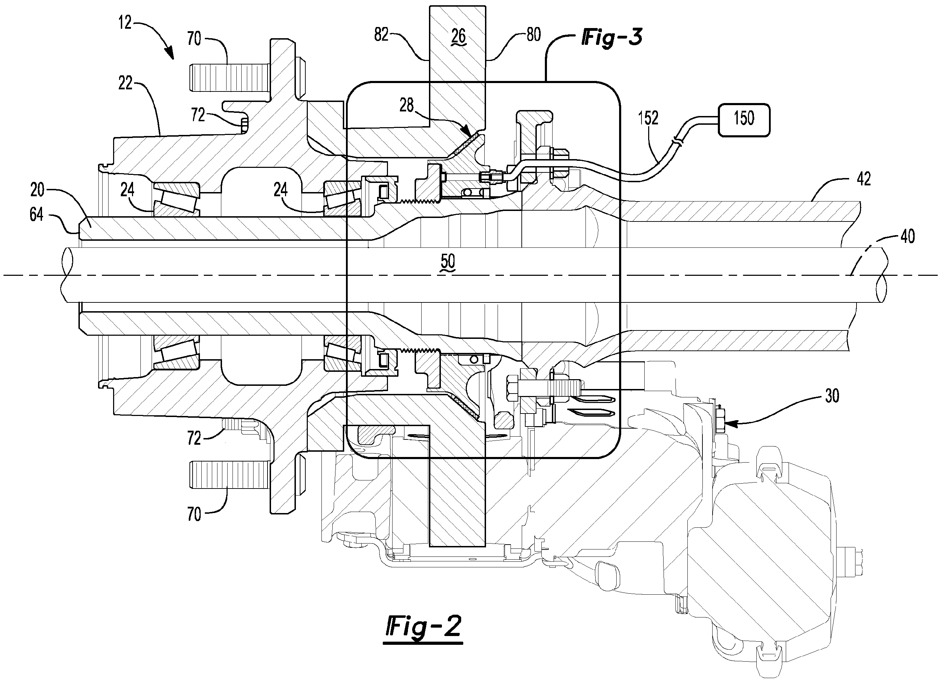

The wheel end assembly 12 is configured to support and facilitate rotation of a wheel. One or more wheel end assemblies 12 may be provided with an axle assembly 10. In at least one configuration and as is best shown with reference to Figure 2, the wheel end assembly 12 includes a spindle 20, a wheel hub 22, one or more wheel bearings 24, a brake rotor 26, and a parking brake 28. The wheel end assembly 12 may also include or be associated with a brake assembly 30 which is best shown in Figure 1.

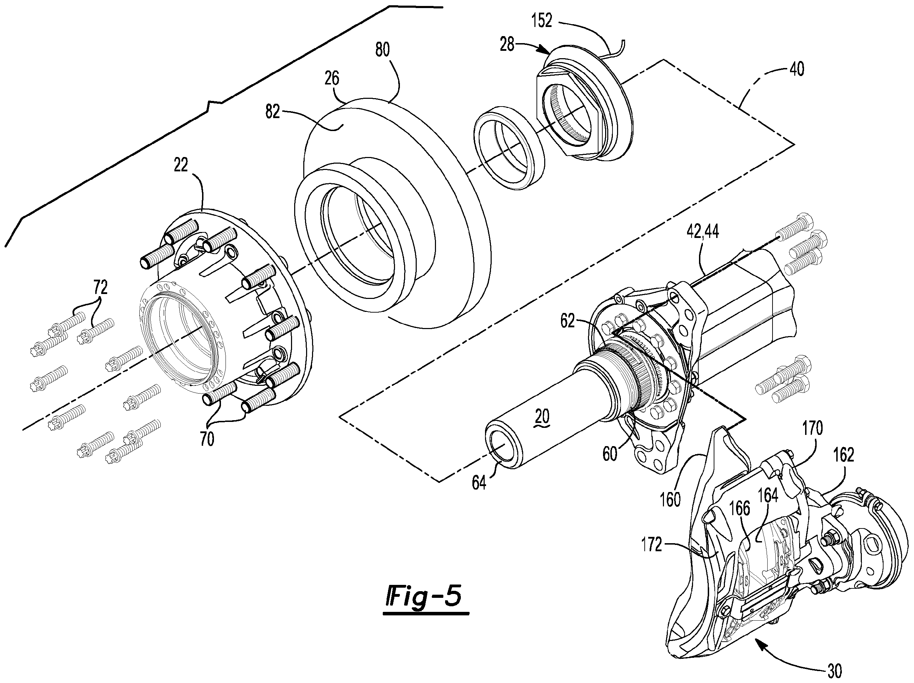

Referring primarily to Figures 2 and 5, the spindle 20 is configured to support components of the wheel end assembly 12. The spindle 20 may extend along or around an axis 40.

The spindle 20 may be integrally formed with the structural component 42 or may be a separate part that is attached to or fixedly mounted to the structural component 42. For instance, in a steerable configuration the spindle 20 may be part of or mounted to a steerable structural component, such as a steering knuckle. In a non-steerable configuration, the spindle 20 may be part of a non-steerable structural component or mounted to a non-steerable structural component, such as a non-rotatable knuckle or an axle housing 44. The structural component 42 may be provided with the axle assembly 10. The term "axle assembly" is used herein to generically reference both steerable and non-steerable configurations; however, the axle assembly will primarily be described in the context of a non-steerable configuration in which the spindle 20 is mounted to or provided with a structural component 42 that is an axle housing 44, an example of which is best shown in Figure 1.

The axle assembly 10 may be configured as a drive axle assembly or a non-drive axle assembly. A drive axle assembly is configured to provide torque from a torque source, such as an electric motor or internal combustion engine, to one or more wheel assemblies. A wheel assembly may include a tire disposed on a wheel. A non-drive axle assembly may not provide torque from a torque source to a wheel assembly. One or more axle assemblies 10 may be provided with the vehicle. The axle assembly 10 will primarily be described as being a drive axle assembly.

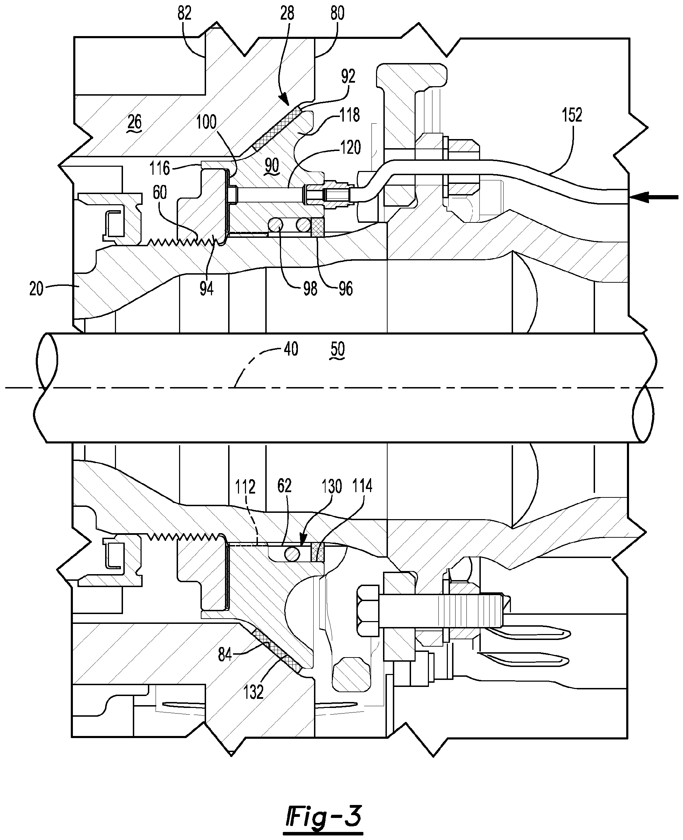

Referring to Figure 2, in some configurations the spindle 20 has a hollow tubular configuration through which an axle shaft 50 may extend. An axle shaft 50 may facilitate the transmission of torque to the wheel end assembly 12. For instance, the axle shaft 50 may be operatively connected at a first end to a vehicle drivetrain component, such as a differential or vehicle torque source, and may be coupled to or operatively connected to the wheel end assembly 12 at a second end. Referring to Figures 3 and 5, in some configurations the spindle 20 includes a mounting feature 60 and a spline 62.

The mounting feature 60 is axially positioned or positioned along the axis 40 between a distal end or free end 64 of the spindle 20 and the spline 62. The free end 64 may be disposed opposite the structural component 42. The mounting feature 60 may facilitate mounting of a fastener 94 of the wheel end assembly 12 as will be discussed in more detail below. The mounting feature 60 may have any suitable configuration. For instance, the mounting feature 60 may be configured as a threaded portion that faces away from the axis 40 and that spirals along the axis 40. In some configurations, the mounting feature 60 may have a female configuration, such as a hole or groove, that may receive a fastener such as a snap ring, clip, or the like.

The spline 62 is axially positioned between the mounting feature 60 and the structural component 42. The spline 62 may include one or more teeth that may extend away from the axis 40. For instance, a plurality of teeth may be arranged around the axis 40 and may extend substantially parallel to the axis 40. The term "substantially parallel" as used herein means the same as or very close to parallel and includes features or axes that are within ±3° of being parallel each other. It is also contemplated that the spline 62 or a portion thereof may be provided with the structural component 42 depending on the length of the spindle 20.

Referring primarily to Figures 2 and 5, the wheel hub 22 is rotatable about the axis 40 with respect to the spindle 20. In addition, the wheel hub 22 is configured to facilitate mounting of a wheel. For instance, the wheel hub 22 may include a set of holes that may each receive a lug bolt 70. A lug bolt 70 may extend through a corresponding hole in the wheel. A lug nut may be threaded onto a lug bolt 70 to secure the wheel to the wheel hub 22 in a manner known by those skilled in the art. For clarity, only some of the lug bolts 70 are labeled in Figures 2 and 5.

Referring to Figure 2, one or more wheel bearings 24 facilitate rotation of the wheel hub 22 about the axis 40 with respect to the spindle 20. In Figure 2, two wheel bearings 24 are depicted. A wheel bearing 24 may have any suitable configuration. For instance, the wheel bearing 24 may include a plurality of rolling elements, such as balls or rollers, that may be disposed between an inner race and an outer race. The inner race may encircle the spindle 20. The outer race may engage the wheel hub 22 and may encircle the inner race and the rolling elements.

Referring primarily to Figures 2 and 5, the brake rotor 26 is rotatable about the axis 40 with respect to the spindle 20. For instance, the brake rotor 26 may be fixedly positioned with respect to the wheel hub 22 and may be rotatable about the axis 40 with the wheel hub 22. In some configurations, the brake rotor 26 is fastened to the wheel hub 22 with one or more fasteners 72, such as bolts. For clarity, only some of the fasteners 72 are labeled in Figure 5. The brake rotor 26 may be axially positioned or positioned along the axis 40 closer to the structural component 42 than the wheel hub 22. The brake rotor 26 may encircle the spindle 20, the wheel hub 22, the parking brake 28, or combinations thereof. The brake rotor 26 may be associated with the brake assembly 30 and may include a first contact surface 80, a second contact surface 82, and a friction surface 84, which are best shown with reference to Figure 3.

The first contact surface 80 is engageable by a first brake pad of the brake assembly 30. The first contact surface 80 may face inboard toward the structural component 42 or to the right from the perspective shown in Figure 3. The first contact surface 80 may extend away from the axis 40 and may be disposed substantially perpendicular to the axis 40. The term "substantially perpendicular" is used to designate features or axes that are the same as or very close to perpendicular and includes features that are within ±3° of being perpendicular each other.

The second contact surface 82 is disposed opposite the first contact surface 80. The second contact surface 82 is engageable by a second brake pad of the brake assembly 30. The second contact surface 82 may extend away from the axis 40 and may be disposed substantially perpendicular to the axis 40. The first contact surface 80 and the second contact surface 82 may not be engageable or contactable by the parking brake 28.

The friction surface 84 is engageable by the parking brake 28. For instance, the friction surface 84 may encircle and be engageable by a friction member of the parking brake 28 as will be discussed in more detail below. The friction surface 84 may not be engageable by the brake assembly 30 or brake pads of the brake assembly 30. The friction surface 84 may face toward the axis 40 and may extend around or encircle the axis 40. In some configurations, the friction surface 84 is disposed at an oblique angle with respect to the axis 40. For instance, the friction surface 84 may have a frustoconical shape. The friction surface 84 may extend further away from the axis 40 as the axial distance from the free end 64 of the spindle 20 increases. In some configurations, the friction surface 84 or a portion thereof may be disposed closer to the axis 40 than the first contact surface 80, the second contact surface 82, or both. Optionally, the friction surface 84 may extend from a contact surface, such as the first contact surface 80.

Referring primarily to Figures 3, 6, and 7, the parking brake 28 is operable to apply a brake torque to inhibit rotation of the brake rotor 26 about the axis 40. The parking brake 28 is radially disposed between or positioned between the spindle 20 and the brake rotor 26. The parking brake 28 may encircle the spindle 20, may engage the spindle 20, or both. In some configurations, the parking brake 28 includes a parking brake body 90, a friction member 92, a fastener 94, a retainer 96, a biasing member 98, and an actuator 100.

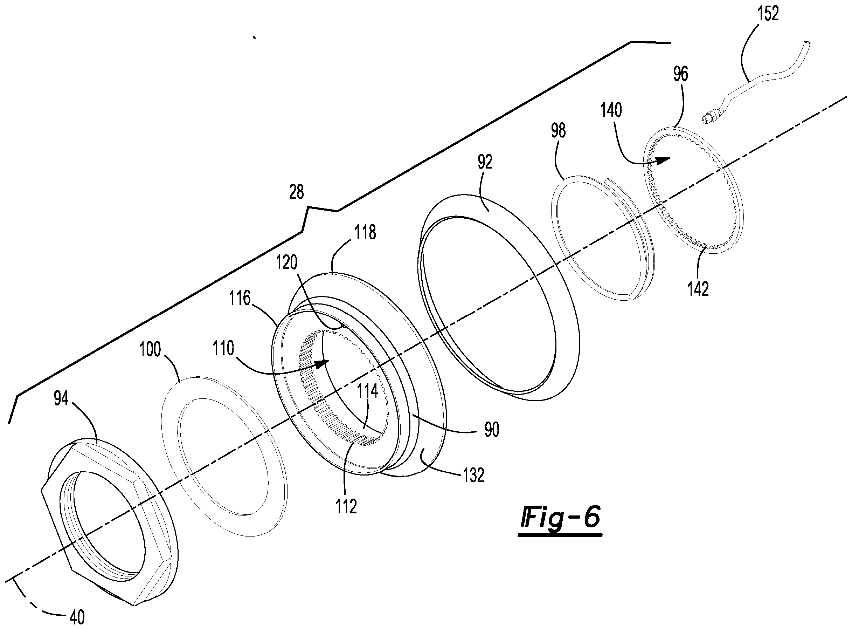

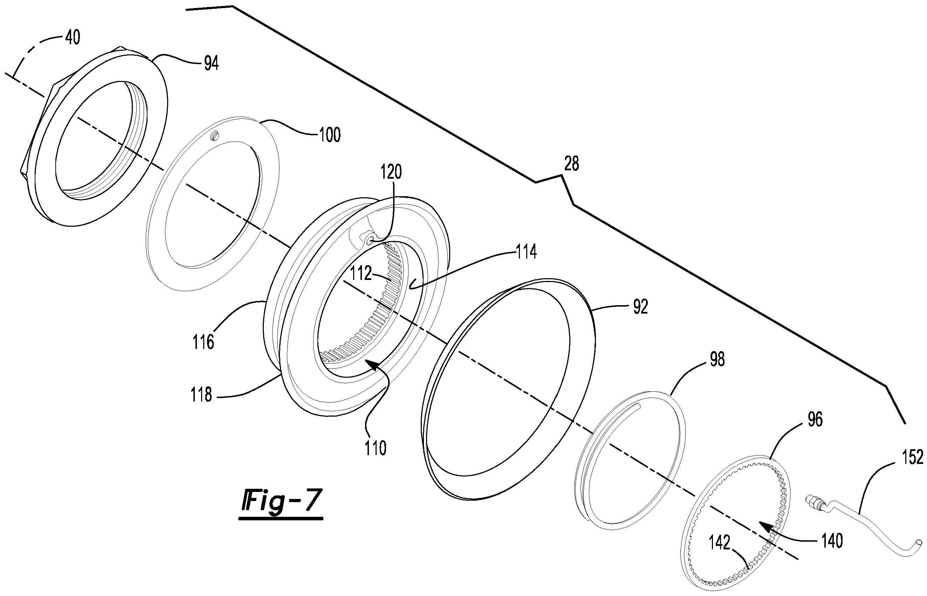

The parking brake body 90 is axially moveable or moveable along the axis 40 with respect to the spindle 20. In some configurations, the parking brake body 90 includes a hole 110, a spline 112, an inner side 114, a first flange 116, a second flange 118, and a fluid passage 120. These features are best shown in Figures 6 and 7.

The hole 110 receives the spindle 20. The hole 110 may be configured as a through hole.

The spline 112 is disposed in the hole 110. The spline 112 may include one or more teeth that may extend toward the axis 40. For example, a plurality of teeth may be arranged around the axis 40 and may extend substantially parallel to the axis 40. The spline 112 of the parking brake body 90 is configured to mate or mesh with the spline 62 of the spindle 20. As such, the spline 112 and the spline 62 may cooperate to inhibit rotation of the parking brake body 90 about the axis 40 with respect to the spindle 20 while permitting the parking brake body 90 to move axially or along the axis 40 with respect to the spindle 20.

The inner side 114 faces toward the axis 40 and may extend from the spline 112. The inner side 114 may be spaced apart from the spindle 20. In some configurations, the inner side 114 encircles the spline 112 and is spaced apart from the spline 112 such that a gap 130 is provided therebetween. The gap 130 is best shown in Figure 3.

The first flange 116, if provided, may help position the actuator 100. The first flange 116 may protrude outwardly or axially toward the fastener 94 and may separate the actuator 100 from the brake rotor 26. The first flange 116 may be radially disposed between the brake rotor 26 and the spindle 20. For instance, the first flange 116 may be radially disposed between the brake rotor 26 and the fastener 94, between the brake rotor 26 and the actuator 100, or both. The first flange 116 may encircle the axis 40, the fastener 94, the actuator 100, or combinations thereof.

The second flange 118 may support the friction member 92. The second flange 118 may have an outer side 132 that may face away from the axis 40. The outer side 132 may extend around or encircle the axis 40. The outer side 132 or a portion thereof may be disposed substantially parallel to the friction surface 84 of the brake rotor 26. In some configurations, the outer side 132 may be disposed at an oblique angle with respect to the axis 40. For instance, the outer side 132 may have a frustoconical shape. The outer side 132 may extend further away from the axis 40 as the second flange 118 extends further away from the first flange 116. The outer side 132 may extend from the first flange 116.

The fluid passage 120, if provided, may extend through the parking brake body 90. The fluid passage 120 may be fluidly connected to the actuator 100. In some configurations, the fluid passage 120 may be configured as a through hole. The fluid passage 120 may be radially positioned between the inner side 114 and the outer side 132. For instance, the fluid passage 120 may be radially positioned further from the axis 40 than the inner side 114 and may be radially positioned closer to the axis 40 than the first flange 116, the second flange 118, or both.

The friction member 92 is engageable with the brake rotor 26. More specifically, the friction member 92 may engage or contact the friction surface 84 of the brake rotor 26 to provide brake torque that inhibits rotation of the brake rotor 26 and hence inhibits rotation of the wheel hub 22 and a corresponding wheel. The friction member 92 may be fixedly positioned with respect to the parking brake body 90. For instance, the friction member 92 may be fixedly disposed on the outer side 132 of the second flange 118 of the parking brake body 90. In some configurations, the friction member 92 may encircle the second flange 118 and may have a frustoconical shape. The friction member 92 may be made of the same material as the friction material or brake lining that is provided with a brake pad of the brake assembly 30. It is also contemplated that the friction member 92 may be omitted in some configurations and that the second flange 118 may be engageable with the friction surface 84.

The fastener 94 is fixedly positioned with respect to the spindle 20. For instance, the fastener 94 may be fixedly coupled to or fixedly disposed on the mounting feature 60 of the spindle 20 when installed. The fastener 94 may have any suitable configuration. In the configuration shown, the fastener 94 is configured as a nut that is threaded onto a mounting feature 60 that is configured as a threaded portion of the spindle 20. In such a configuration, the fastener 94 may be fixedly disposed on the spindle 20 by tightening the fastener 94. The fastener 94 may engage and support the actuator 100. Moreover, the fastener 94 may help inhibit or limit axial movement of the of the parking brake body 90 toward the free end 64 of the spindle 20, or to the left from the perspective shown in Figure 3. It is also contemplated that the fastener 94 may not be a nut but may be a clip, snap ring, pin, or the like.

The retainer 96 is fixedly positioned with respect to the spindle 20. For instance, the retainer 96 may be fixedly coupled to the spindle 20 when installed. The retainer 96 may be received in the gap 130 between the spindle 20 and the inner side 114 of the parking brake body 90. In some configurations, the inner side 114 encircles the spline 112 and is spaced apart from the spline 112 The retainer 96 may have any suitable configuration. In some configurations, the retainer 96 may be configured as a pin, clip, snap ring, or the like. In the configuration shown, the retainer 96 has an annular configuration and may include a retainer hole 140 and a retainer spline 142, which are best shown in Figures 6 and 7.

The retainer hole 140 may receive the spindle 20. The retainer hole 140 may be a through hole.

The retainer spline 142 may be disposed in the retainer hole 140. The retainer spline 142 may include one or more teeth that may extend toward the axis 40. For example, a plurality of teeth may be arranged around the axis 40 and may be configured to mate or mesh with the spline 62 of the spindle 20. As such, the retainer spline 142 and the spline 62 may cooperate to inhibit rotation of the retainer 96 about the axis 40 with respect to the spindle 20.

The retainer 96 may be inhibited from moving axially or along the axis 40 with respect to the spindle 20 in any suitable manner. For instance, the retainer 96 may engage a step or portion of the spindle 20 or the spline 62 that protrudes away from the axis 40 to prevent axial movement of the retainer 96 away from the free end 64 of the spindle 20 or to the right from the perspective shown in Figure 3. It is also contemplated that the retainer 96 may be secured or inhibited from moving axially with respect to the spindle 20 in at least on direction in other ways, such as with an interference fit, fastener, adhesive, weld, or the like.

The biasing member 98 urges the parking brake body 90 to move axially or move along the axis 40. In some embodiments, the biasing member 98 urges the parking brake body 90 to move toward the brake rotor 26 and engage the brake rotor 26 as shown in Figure 3. The biasing member 98 may have any suitable configuration. For instance, the biasing member 98 may be configured as one or more springs, wave washers, a resilient material, or the like.

The biasing member 98 may extend axially between the parking brake body 90 and the retainer 96. For instance, the biasing member 98 may be axially positioned between the retainer 96 and the spline 112 of the parking brake body 90 and may extend from the retainer 96 to the spline 112.

The biasing member 98 may be radially disposed between the spindle 20 and the parking brake body 90. For instance, the biasing member 98 may be disposed in the gap 130. In some configurations, the biasing member 98 may encircle the spindle 20. In some configurations, the parking brake body 90 may encircle the biasing member 98.

The actuator 100 may urge the parking brake body 90 to move axially with respect to the spindle 20. In some configurations, the actuator 100 may actuate or move the parking brake body 90 to disengage the friction member 92 from the brake rotor 26 when the actuator 100 is operated, extended, or advanced; however, it is contemplated that the direction of movement may be reversed in some configurations.

In the configuration shown, the actuator 100 is axially positioned between the parking brake body 90 and the fastener 94. For example, the actuator 100 may extend from the parking brake body 90 to the fastener 94. The actuator 100 may be radially disposed between the spindle 20 and the brake rotor 26. For instance, the actuator 100 may be radially disposed between the spindle 20 and the first flange 116 of the parking brake body 90. In some configurations, the actuator 100 may encircle the spindle 20.

The actuator 100 may have any suitable configuration. In some configurations, the actuator 100 is inflatable with a fluid, such as a gas, liquid, or combinations thereof. For instance, the fluid may comprise a gas or gas mixture such as air in a pneumatic configuration and may comprise a liquid such as hydraulic fluid in a hydraulic configuration. In such configurations, the actuator 100 may be fluidly connected to a fluid source 150, which is best shown in Figure 2, that may provide a pressurized fluid to the actuator 100. For instance, a conduit 152 such as a hole, pipe, tube or the like may connect the fluid source 150 directly to the actuator 100 or indirectly to the actuator 100, such as via the fluid passage 120. It is also contemplated that the actuator 100 may be configured as an electrical actuator, electromechanical actuator, mechanical actuator or the like in other configurations.

Operation of the parking brake 28 will now be described. The parking brake body 90 is moveable between a first position and a second position.

In Figure 3, the parking brake body 90 is shown in a first position. In the first position, the parking brake 28 inhibits rotation of the brake rotor 26 and hence inhibits rotation of the wheel hub 22 and an associated wheel. For example, the parking brake body 90 may be positioned along the axis 40 such that the friction member 92 engages the friction surface 84 of the brake rotor 26 when the parking brake body 90 is in the first position. In the first position, the actuator 100 may be retracted or deflated. The parking brake body 90 may be held in the first position by the biasing force exerted by the biasing member 98, which urges the parking brake body 90 to move to the left from the perspective shown.

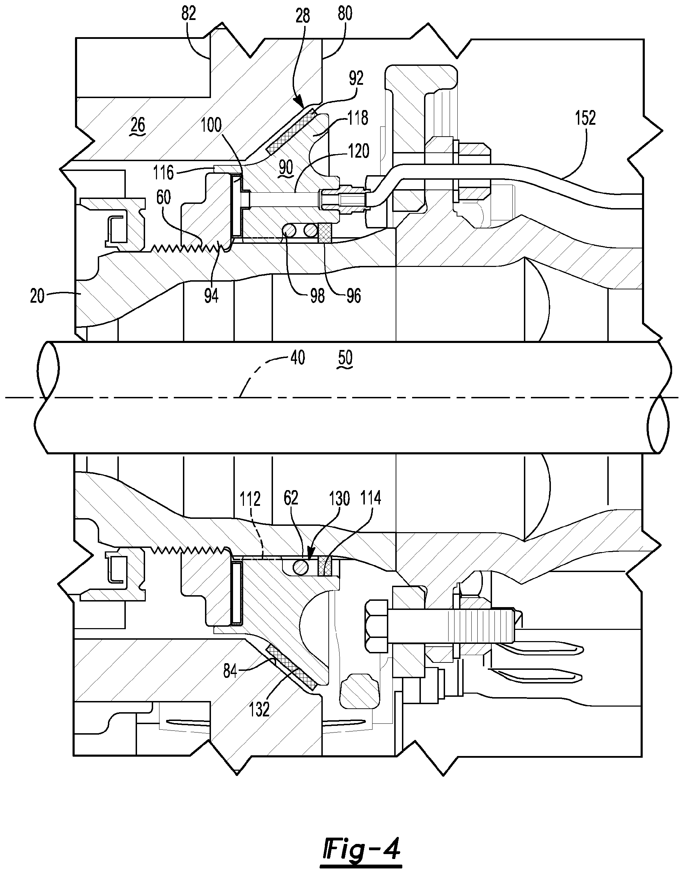

In Figure 4, the parking brake body 90 is shown in a second position. In the second position, the parking brake 28 does not inhibit rotation of the brake rotor 26. The parking brake body 90 may be moved from the first position to the second position in response to force exerted by the actuator 100. For instance, the actuator 100 may be extended or inflated with fluid that is provided by the fluid source 150. In response, the actuator 100 moves the parking brake body 90 along the axis 40 to the second position such that the friction member 92 disengages the friction surface 84 of the brake rotor 26 when sufficient force is exerted by the actuator 100 to overcome the biasing force exerted by the biasing member 98.

The parking brake body 90 may move from the second position back to the first position when sufficient force is not exerted by the actuator 100 to overcome the biasing force exerted by the biasing member 98. For instance, fluid may be vented from the actuator 100 to reduce the force exerted by the actuator 100.

The actuator 100 may be manually controlled, automatically controlled, or combinations thereof. For instance, the actuator 100 may be extended or inflated automatically when the vehicle is started or is in a running condition, such as when the torque source is operable to propel the vehicle. As such, the parking brake 28 may be automatically released or disengaged when the vehicle is in an operating state that permits the vehicle to move under its own power. Conversely, it is contemplated that the parking brake 28 may be automatically engaged when the vehicle is turned off or in an operating state in which the vehicle is not moveable under its own power. It is also contemplated that the actuator 100 may be manually controlled, such as with a driver or operator input, and that manual control may override automatic control. For instance, it is contemplated that the parking brake 28 may be manually released or disengaged when the vehicle is turned off or is in an operating state that does not permit the vehicle to move under its own power, such as to facilitate towing of the vehicle.

The parking brake 28 is operable independent from the brake assembly 30. It is contemplated that the parking brake 28 may provide brake torque when the vehicle is stationary, the vehicle is off or not started, when a brake pad of the brake assembly 30 is retracted (e.g., when the brake assembly 30 is not providing brake torque), or combinations thereof.

The brake assembly 30 is operable to apply a brake torque that may slow or stop rotation of the brake rotor 26. The brake assembly 30 differs from the parking brake 28 previously discussed.

The brake assembly 30 may be of any suitable type, such as a disc brake. In such a configuration, the brake assembly 30 may include a brake carrier 160, a brake caliper 162, a first brake pad 164, and a second brake pad 166. A brief overview of these components and operation of the brake assembly 30 is provided below.

The brake carrier 160 facilitates mounting of the brake assembly 30. For instance, the brake carrier 160 may be fixedly mounted to the structural component 42. The brake carrier 160 may receive and support the first brake pad 164 and the second brake pad 166 and may include an opening through which the brake rotor 26 may extend. In some configurations, the brake carrier 160 straddles the brake rotor 26 and helps position the first brake pad 164 and the second brake pad 166 on opposite sides of the brake rotor 26.

The brake caliper 162 is mounted to the brake carrier 160 and may support various components of the brake assembly 30. In addition, the brake caliper 162 may help position the first brake pad 164 and the second brake pad 166 with respect to the brake rotor 26 to facilitate braking of the vehicle as will be discussed in more detail below. In at least one configuration, the brake caliper 162 may include a caliper housing 170 and a caliper bridge 172.

The caliper housing 170 may be moveably disposed on the brake carrier 160. For example, the caliper housing 170 may be slidable along a pair of guide pins that may be fixedly disposed on the brake carrier 160. The caliper housing 170 may receive or support various components that may facilitate actuation of a brake pad. For instance, the caliper housing 170 may support a tappet that may protrude from an internal chamber of the caliper housing 170. The tappet may extend from the caliper housing 170 toward the brake rotor 26 to engage the first brake pad 164. The tappet may be moveable along an axis with respect to the caliper housing 170 such that the tappet may move toward and away from the brake rotor 26. As an example, an actuator may extend the tappet to actuate the first brake pad 164 that is disposed between the caliper housing 170 and the brake rotor 26 into engagement with the brake rotor 26. A reaction force may then move the caliper housing 170 and caliper bridge 172 with respect to the brake carrier 160 to actuate the second brake pad 166 that is disposed between the caliper bridge 172 and the brake rotor 26 into engagement with an opposite side of the brake rotor 26 to help slow rotation of the brake rotor 26.

The caliper bridge 172 may be fixedly positioned with respect to the caliper housing 170. The caliper bridge 172 may be integrally formed with the caliper housing 170 or may be a separate component that is mounted to the caliper housing 170.

The first brake pad 164 and the second brake pad 166 are disposed on opposite sides of the brake rotor 26. The first brake pad 164 and the second brake pad 166 are configured to engage the first contact surface 80 and the second contact surface 82 of the brake rotor 26, respectively, to provide brake torque to slow or stop rotation of the brake rotor 26. The first brake pad 164 and the second brake pad 166 may not be engageable with the friction surface 84 of the brake rotor 26. The first brake pad 164 and the second brake pad 166 may include friction material that is disposed on a backplate. The friction material may engage the brake rotor 26 during braking and may be spaced apart from the brake rotor 26 when braking is not provided.

The wheel end assembly described herein may allow a more compact parking brake to be provided. For instance, the parking brake may be packaged in the space between a spindle and a brake rotor. As a result, the parking brake actuator may be more compactly arranged as compared to designs in which the parking brake actuator is externally located. The wheel end assembly may provide parking brake functionality with a parking brake that is operable independent of a disc brake assembly that is configured to brake a wheel hub. As such, parking brake functionality may be provided when the disc brake assemblies or an associated disc brake actuator is inoperative, such as may be the case when the vehicle is turned off or when the disc brake assemblies are not configured to provide parking brake functionality, such as may be the case with some hydraulically actuated disc brake assemblies. Providing parking brake functionality may inhibit movement of the vehicle when a torque source is turned off or is inactive. In a configuration in which the torque source is an electric motor, the parking brake may be used to inhibit vehicle movement rather than by providing parking brake functionality with torque from the electric motor, which may help reduce energy consumption and avoid overheating of the electric motor. Thus, the parking brake may provide parking brake functionality and may do at a lower cost or with lower energy consumption than with other parking brake configurations.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A wheel end assembly comprising:
a spindle;
a brake rotor that is rotatable about an axis with respect to the spindle; and
a parking brake that is radially disposed between the spindle and the brake rotor, the parking brake being operable to apply a brake torque to inhibit rotation of the brake rotor about the axis.

2. The wheel end assembly of claim 1, wherein the parking brake encircles the spindle.

3. The wheel end assembly of claim 1 or claim 2, wherein the brake rotor encircles the parking brake.

4. The wheel end assembly of any previous claim, wherein the brake rotor further comprises a friction surface that faces toward the axis and the parking brake further comprises a friction member that is engageable with the friction surface to provide the brake torque, optionally wherein the friction surface encircles the friction member.

5. The wheel end assembly of claim 4, wherein the friction surface is disposed at an oblique angle with respect to the axis.

6. The wheel end assembly of claim 4 or claim 5, wherein the parking brake further comprises a parking brake body, wherein the friction member is fixedly disposed on the parking brake body, optionally wherein the parking brake body is moveable along the axis between a first position in which the friction member engages the friction surface of the brake rotor and a second position in which the friction member does not engage the friction surface of the brake rotor.

7. The wheel end assembly of claim 6, wherein the parking brake body and the spindle have mating splines that permit the parking brake body to move axially with respect to the spindle.

8. The wheel end assembly of claim 6 or claim 7, wherein the parking brake further comprises a biasing member that urges the parking brake body to move along the axis, optionally wherein the biasing member is radially disposed between the parking brake body and the spindle.

9. The wheel end assembly of claim 8, wherein the parking brake body encircles the biasing member and the biasing member encircles the spindle.

10. The wheel end assembly of claim 8 or claim 9, wherein the parking brake further comprises a retainer that is fixedly positioned with respect to the spindle, wherein the biasing member extends between the retainer and the parking brake body, optionally wherein the spindle further comprises a spline, the retainer further comprises a retainer spline, and the retainer spline mates with the spline to inhibit movement of the retainer with respect to the spindle.

11. The wheel end assembly of any of claims 6 to 10, wherein the parking brake further comprises an actuator that urges the parking brake body to move along the axis, optionally wherein the actuator is inflatable with a fluid and the parking brake body moves away from the brake rotor when the actuator is inflated with the fluid.

12. The wheel end assembly of claim 11, wherein the parking brake body further comprises a fluid passage that extends through the parking brake body and is fluidly connected to the actuator.

13. The wheel end assembly of claim 11 or claim 12, wherein the actuator engages the parking brake body and encircles the spindle.

14. The wheel end assembly of any of claims 11 to 13, wherein the parking brake further comprises a fastener that is fixedly disposed on the spindle, wherein the actuator extends between the fastener and the parking brake body.

15. The wheel end assembly of any of claims 11 to 14, wherein the actuator is radially disposed between the spindle and the parking brake body.
